# EUROPEAN PATENT APPLICATION

(11) **EP 1 811 380 A1**
(43) Date of publication of application: **25.07.2007**
(21) Application number: 05714823.1
(22) Date of filing: 10.03.2005
(51) Int. Cl.: G06F 11/30

(54) **METHOD FOR PROTECTING THE COMPUTER DATA**

(30) Priority: 21.08.2004 US 923921; 09.02.2005 US 53231
(71) Applicant: Fang, Ko-Cheng, Taipei County, Taiwan (CN)
(72) Inventor: Fang, Ko-Cheng, Taipei County, Taiwan (CN)
(74) Representative: Becker Kurig Straus
(86) International application number: PCT/CN2005/000292
(87) International publication number: WO 2006/021132

(57) **Abstract**

This computer data protection method of the present invention requires a user to enter a correct password for modifying any data. If wrong passwords are typed, this method forbids modification of any program modules. Further, if any program module is detected having unauthenticated modification, that program module is deleted and an original image of that program module is loaded to recover normal operation of the operation system. Additionally, a common password is also provided in the protection method. Some special function can use this common password to pass the detection of this method to perform any modification.

## Description

### Field of Invention

The present invention relates to a security method, and particularly relates to a computer data security method.

### Background of the invention

With the popularity of computer and the progress of the network technology, computers have been closely involved in human daily life. For example, people can use computer to record various digital data. Even people can use the duplicating machine of the computer to reproduce the same digital data in a digital recording media.

Most computers are connected to networks like the Internet, intranets, and telecommunication networks. In other words, networks have become an unavoidable tool in life. However, a network also exposes users thereof to various attacks. For example, data on the network can be destroyed, changed, or copied by hackers. When the hacker gets the data, he can employ the reproduction function to reproduce the data and even sell the data. There are many transferring and copy preventing technology developed to avoid security data is spread. However, these new safeguarding approaches have failed due to market acceptance issues.

On the other hand, since the computers have bigger amount of data, and is more frequently interacted with networks, the problem of computer virus is also more and more serious. Once a computer virus invades, at least the inconvenience of daily life or work is caused, and more severely, the life or property loss is likely to be caused.

Typically, a firewall system is used to filter information and control access and an anti-virus program is used to block computer viruses from network or other hacker. There are two types of firewall systems, software firewall systems and hardware firewall systems. These firewall systems allow a system administrator to set certain safety conditions. For example, the firewall systems can be configured so that data packets from unknown addresses are filtered out, or some transmission ports of certain protocols are closed. However, all these approaches only focus on stopping first stage hacker attacks. Once the hacker satisfies a safety condition, the hacker can enter the network and do as he or she pleases. Hackers often try to break a security system by repeatedly testing passwords. Current firewall systems fail to detect and respond properly to this sort of early stage hackers in the early stage and respond properly. Once a hacker breaks the firewall system, the hacker also destroys all hacking data at the same time. In the other hand, simple attempt to test passwords for login cannot bring the hacker to legal resolution because the hacker does not do anything bad yet. Therefore, there are needs for improving the network security systems nowadays.

On the other hand, Most of the anti-virus programs are designed by analyzing the patterns of various virus codes; storing the patterns into a database used for scanning and detecting viruses. The virus technology is changed with each passing day, wherein the method for virus propagation is evolved from attachment in execution files in early days to attachment in e-mails, so that the database storing the virus codes is bigger and bigger. It can be imagined that when the database become enormous later, each scanning time will be very long, and the computer normal operation will be seriously effected. Under this vicious circle, even if the computer's hardware and software have stronger function, the efficacy thereof cannot be substantially promoted due to computer viruses, and users may be held back against the over-complicated system aforementioned.

Further, users also need to renew the virus database, or the anti-virus programs cannot be used to guard the computer security. Although some computer users may be interested in computer security and are willing to follow the related information timely, yet more computer users may be totally uninterested therein and do not have time to renew the anti-virus programs.

Hence, it is a very important task regarding how to develop a guarding computer security system and method to avoid the attack from hacker and resolve the computer virus problems. Additionally, there are needs for inhibiting the unauthorized digital media is reproduced.

### SUMMARY OF THE INVENTION

Therefore, one purpose of the present invention is to provide a data protection method that is able to respond properly to activities of hackers in the early stage. The response of the system includes recording the activities of unauthorized users or activating certain reactions.

Another purpose of the present invention is to provide a data protection method for preventing a computer from virus attack.

Yet another purpose of the present invention is to provide a data protection method to prevent the unauthorized digital media reproduced.

According to the present invention, a user request is transmitted to the inner data system via the redirect system if the user request satisfies a certain safety condition. Otherwise, the user request is transmitted to a reaction system which provides virtual data similar to real data so that unauthorized users have the illusion of successfully hacking the inner data system. Meanwhile, the illegal activities are recorded and certain programs like Trojan programs can be used for executing reactions.

Additionally, the present invention provides a monitor program comprising the following steps. At first, a monitor program is designed with respect to an operating system, i.e. an anti-virus program. The monitor program monitors a plurality of program modules of the operating system so as to detect if the system functions have any modification. Further, the system initialization also includes allowing a user to assign a set of passwords used for verifying if there is a privilege to modify system files. Thereafter, during the computer operation process, if any modification/addition/deletion action is performed onto the program modules of the operating system, the monitor program asks the user to enter the set of passwords. If the set of passwords is missing, the monitor program forbids any modification/addition/deletion action to be performed onto the program modules. On the contrary, if the set of passwords is authenticated, the changing action of modification/addition/deletion is allowed, and is also recorded as a basis for determining if the changing action is legitimate.

Besides, when the monitor program detects the program modules having unauthenticated modification, the monitor program deletes the program modules and loads the backup images of the program modules so as to recover the computer back to normal operation.

On the other hand, a common password is also provided in the monitor program. The main purpose of the common password is to make some special function with this common password that can be performed in any computer but not performing the password authentication step. In other words, this virus can use the common password to pass the detection of the monitor program to perform any program modification.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Figure 1 illustrates a basic network structure;
Figure 2 is a schematic diagram showing an invaded software system;
Figure 3 is a schematic diagram showing the external relationship of an embodiment of the present invention;
Figure 4 is a flowchart showing the implementation of the program of an embodiment of the present invention;
Figure 5 is a display schematic diagram illustrating that a user is asked to enter a set of passwords for confirmation;
Figure 6 illustrates a protect system for preventing the hacker to browse the stored data according to the preferred embodiment of the present invention; and
Figure 7 is an operation flowchart of the preferred embodiment.

### Detailed Description of the Preferred Embodiment

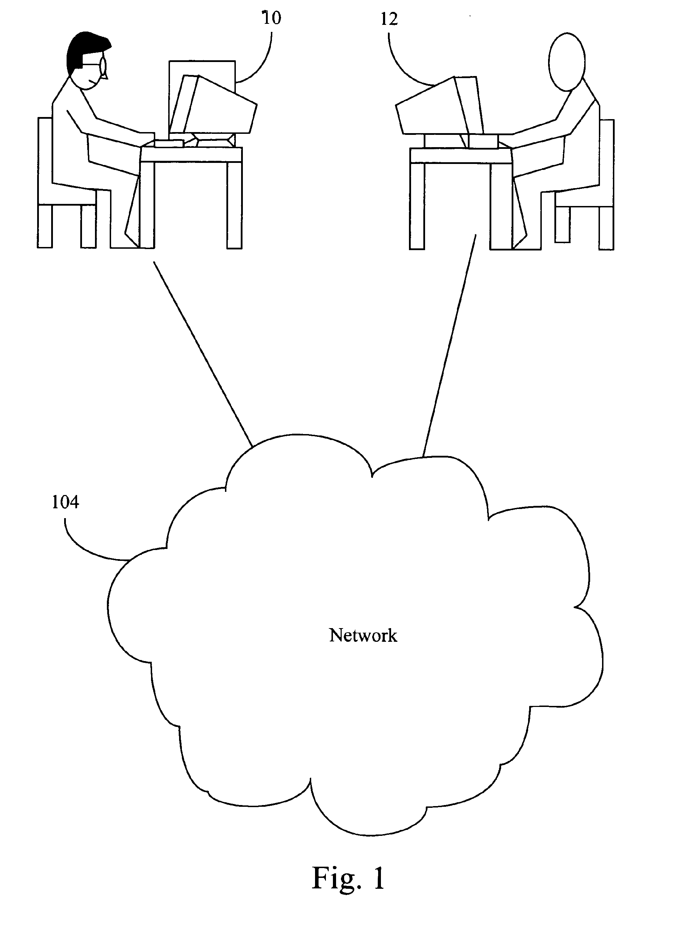

Fig. 1 illustrates a basic network structure. When a user 10 connected with the network 104, there is a probability of the data stored in the computer belonging to the user 10 being stolen or destroyed by a hacker 12 through the network 104. For example, the hacker 12 can browse the stored data through the network 104 if he can decode the password. Moreover, the hacker also can design and spread viruses on a network 104, and files carrying the viruses are downloaded while the user 10 through the network 104. When these files carrying the viruses are loaded back to the computer of the user 10, under certain situations, such as the infected files or macros are executed, the viruses further sneak into program modules of an operating system and waits to break out so as to damage the computer. Therefore, the present invention provides a system and method for preventing the attack from the hacker.

When a hacker spreads viruses on a network to attack the computer, the present invention provides a system and method for preventing computer from virus attacks.

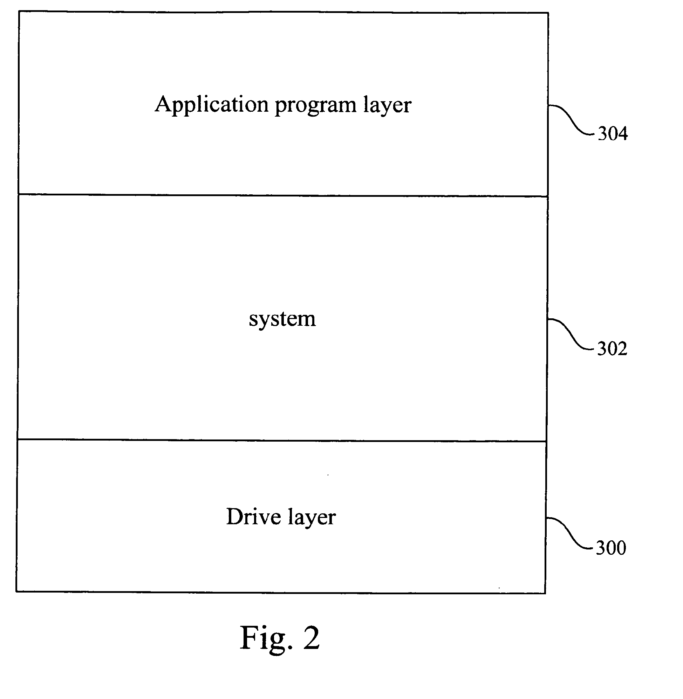

Please refer to Figure 2. Generally speaking, a computer software system includes a driver layer 300, an operating system layer 302 and an application program layer 304, wherein each of the three layers is responsible for different jobs, and yet the three layers have to tightly work together so as to accomplish the jobs requested by a user. The driver layer 300 is generally designed and developed by different kinds of hardware vendors, and the application program layer 304 is developed for various user applications, and the operating system layer 302 acts as an important bridge between the application program layer 304 and the drive layer 300. With the use of program calls in the operating system layer 302, the designers of the application program layer 304 do not need to take care of all the hardware details, and can be sorely focused on designing and completing the jobs to be processed.

The operating system layer 302 is generally composed of many program modules. For example, Microsoft operating systems are the most popularly used in personal computers, and are composed of huge program modules packed into a series of system files, and those system files are loaded into memory for executing related jobs in accordance with the requests while the operating system is in execution.

However, when virus codes of the computer virus are executed, the virus codes will alter the program modules in the operating system layer 302 so as to intercept or change the normal operation of the original program modules. Briefly speaking, the computer is infected by the virus.

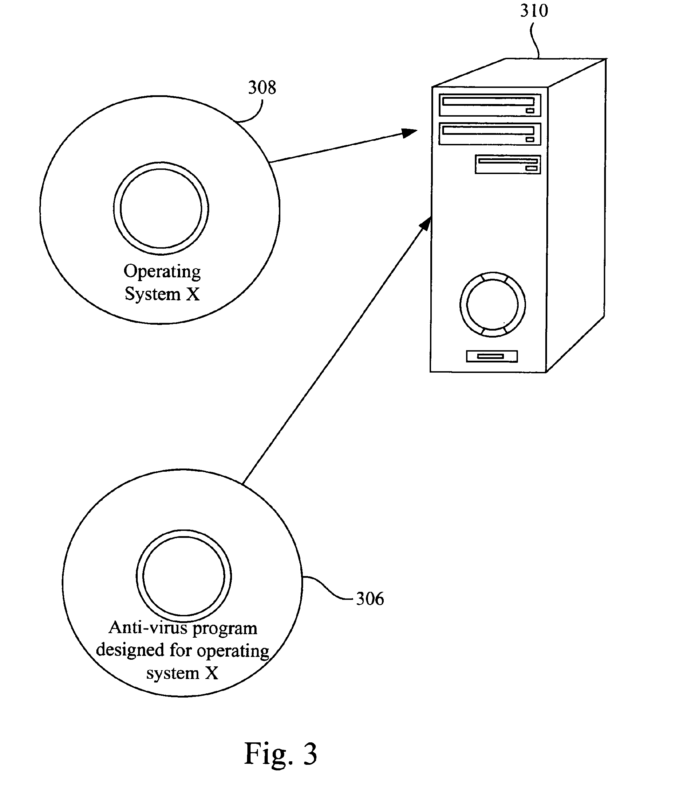

Figure 3 is a schematic diagram showing an anti-virus system according to the preferred embodiment of the present invention. At first, a user loads an operating system 308 into a computer 310. After installation, the user further loads an anti-virus program 306 particularly designed for the operating system 308 into the computer 310. For example, when Microsoft publishes Windows 2000 operating system, the user has to purchase an anti-virus program corresponding to Windows 2000 operating system. The following description is stated for explaining how to use the anti-virus program 306 to perform a detection and anti-virus job.

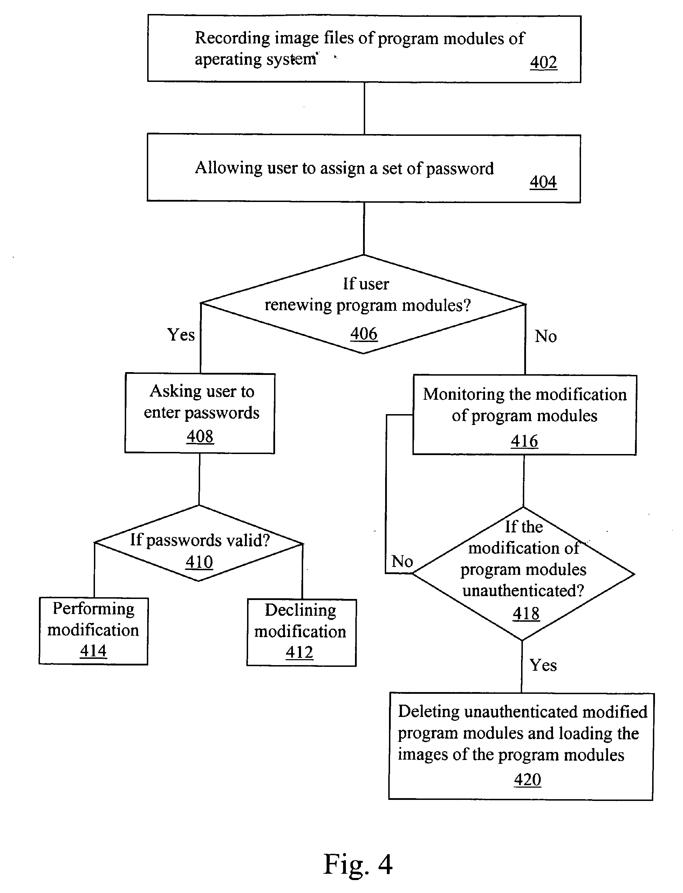

Fig. 4 is a flowchart showing the operation of the anti-virus program 306.

At first, the anti-virus program 306 records image files of the program files of the operating system (step 402). With regard to this step, the image files of the specific operating system can be backed up in advance. The other method for preparing this step is to enable the anti-virus program 306 dynamically to search for which files are used for storing the program files of the operating system 308 by such as file extension names after the operating system is installed; and to record the images of the files searched in the mode of data compression or uncompression. In order to rapidly detect if the program modules have been altered, a hash function can be additionally used to compute and obtain an index with respect to system files, and thus the index can be used for comparison so as to rapidly detect if the program modules have been altered.

Thereafter, the anti-virus program allows the user to assign one user password (step 404), and the password is used for verifying the user's privilege as the basis for altering the aforementioned program modules.

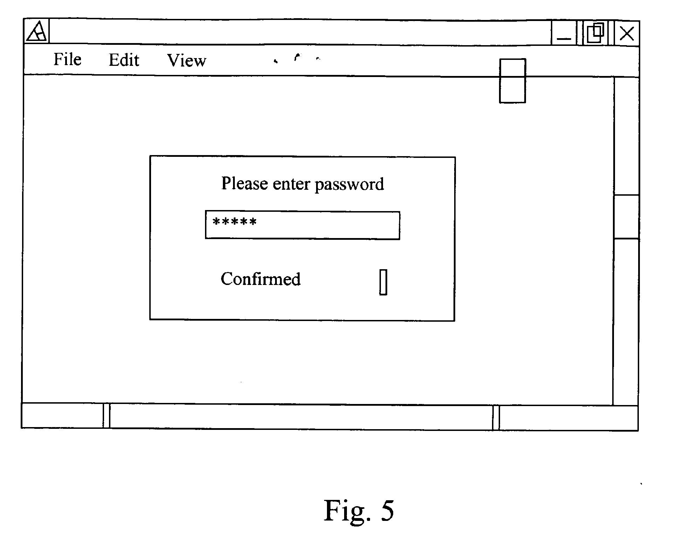

The description stated above is the fundamental step of system configuration. Thereafter, when the user wants to renew any one of the aforementioned program modules (step 406), the anti-virus 306 shows a suggestive window and asks the user to enter the passwords for authentication (step 408), such as shown in Fig. 5. In order to perform this type of monitoring mission, the anti-virus program 306 needs a permanent part to be in charge of intercepting the operation used for altering the program modules. With regard to this point, one method therefor is to enable the anti-virus program 306 to intercept the file operation interface of the operating system, such as in a Windows operating system, an interception action is performed on an API of file operation, and an inspection action is made to check if the altered file is a system file existing in the record and having the aforementioned program modules.

If the user enters incorrect passwords, the anti-virus program 306 declines the modification of the program modules (step 412), or on the contrary, the anti-virus program 306 allows the modification of the program modules (step 414). Further, the anti-virus program 306 renews the database, and saves the data of the new program modules as legitimate reference data.

Besides performing password authentication step onto the interceptable modification of the program modules, the anti-virus program 306 also monitor the program modules periodically or whenever the computer is started (step 416), so as to check if there is any unauthenticated modification/addition/deletion action (step 418). If any modification/addition/deletion action is found, then the program modules are determined to be infected by viruses, and thus the program modules are deleted, and images of the program files are reloaded to the operating system so as to recover the operating system back to normal operation.

Additionally, the user password is also used to be an identification number of this computer. In other words, when this computer is connected to the Internet, utilizing this user password can sure which computer is connected to this Internet. However, for avoiding two computers use a same user password to be the identification number, predetermined identification numbers can be arranged to computers. In other words, each computer has a special identification number. Therefore, according to the predetermined identification numbers, it is easy to sure which computer is connected to the Internet.

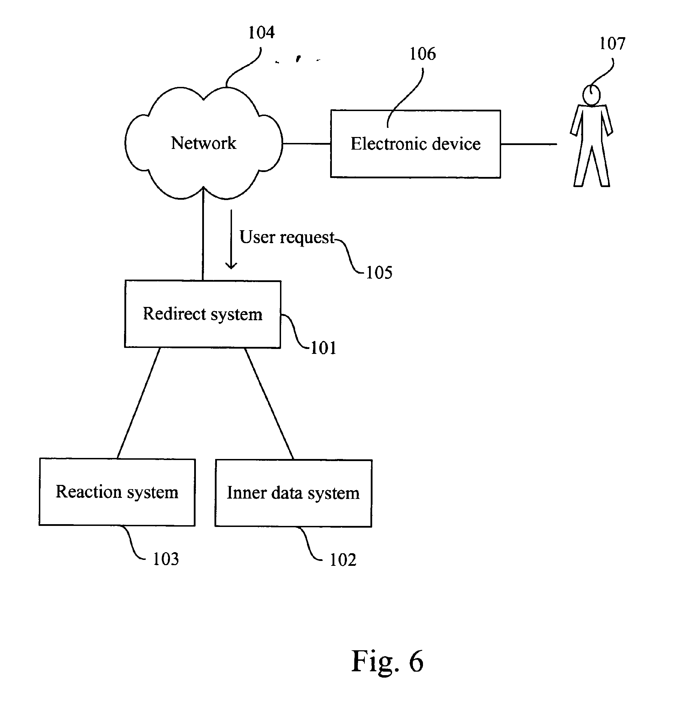

The method of arranging predetermined identification numbers to computers can be used in any computer system to prevent attacking from a hacker. Figure 6 illustrates a protect system for preventing the hacker to browse the stored data in a computer according to the preferred embodiment of the present invention. A redirect system 101 is connected to an external network 104, an inner data system 102, and a reaction system 103 respectively. According to the present invention, a predetermined identification number or a user password is arranged to this computer.

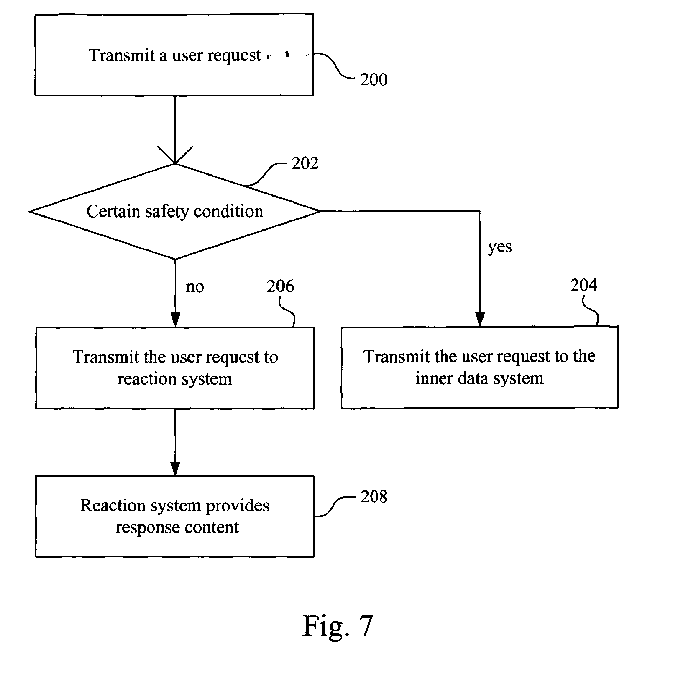

Fig. 7 is an operation flowchart of the preferred embodiment. With simultaneous reference to both Figs. 6, in normal situation, a user 107 uses an electronic device 106, e.g. a computer, transmits a user request 105 to the redirect system 101 via the external network 104 (step 200). If the user request 105 satisfies a certain safety condition (step 202), the redirect system 101 then transmits the user request 105 to the inner data system 102 (step 204) for further processing. Examples of the redirect system 101 include IP sharing devices, hardware firewall systems, software firewall systems or other systems having transmission ability according to certain protocols. Examples of the inner data system 102 include web servers, file servers, and any server or machine that provides users data under request.

However, if the user request 105 fails to satisfy the safety condition (step 202), which means unauthorized activity is occurring, the redirect system 101 does not reject the user request 105 directly. Instead, the user request 105 is transmitted to the reaction system 103 (step 206). The reaction system 103 then provides the user response contents according to the user request 105 with a predetermined method (step 208).

The response contents are adjusted so that they have the same format as what the inner data system 102 would provide the user according to the user request 105.

In other words, unauthorized users 107 fall under an illusion that they have successfully hacked the system because the reaction system 103 provides the unauthorized users 107 with data having a format similar to that of real data. If the unauthorized users continue illegal activities, the reaction system 103 records these activities and executes various reactions, such as calling the police and tracing related data of the unauthorized users 107, the computer ID. Accordingly to the present invention, since each computer has a special indification number or user password, the unauthorized users 107 can be traced according to its identification number or user password. On the other hand, even though the unauthorized users 107 use public computers, the management of the public computers is required to be responsible to the illegal activities of the unauthorized users 107 if these illegal activities happens in his management. Therefore, the present invention can also push the management to do his best to monitor any illegal activities. In other words, the present invention indirectly improves the Internet security.

On the other hand, according to the present invention, the important data, such as confidential data, are stored in the inner data system 102, but not the reaction system 103, and therefore, the embodiment is able to record and respond properly to unauthorized activities with no risk to the important data.

The reaction system 103 can be coupled to the redirect system 101 and the inner data system 102 separately or together. The redirect system 101 can be coupled to redirect system 103 and the inner data system 102 separately or together. The inner system 102 can also be coupled to redirect system 101 and the reaction system 103 separately or together.

In addition, connections between the redirect system 101, reaction system 103, inner data system 102 and external system 104 can be of wire, wireless, direct, or indirect forms. Further, the inner data system 102 can be a plurality of inner servers and is not limited in number to one.

In addition, the external network 104 and the internal network 109 can be the Internet, intranets, wireless networks, telecommunication networks, and other similar networks. The user request 105 include file transfer protocols (FTP), hypertext transfer protocols (HTTP), network neighboring and others based on IP packets.

Examples of the redirect system 101 include hardware firewalls and software firewalls, and IP sharing devices. The inner data system 102 includes web servers, file servers, database servers and personal computers. The electronic device 106 includes personal computers, personal digital assistant, mobile phones and workstations.

Examples of the aforementioned safety condition include determining whether number of login attempts using an invalid password has exceeded a predetermined limit and receiving an unknown identification code from machine 106. The safety condition can also be set as a portion of commands for accessing data by system administrators, for example, a subset of commands or instructions in HTTP but not all being allowed.

The predetermined reaction method of the reaction system 103 can also be set by a system administrator, or be configured directly in the reaction system 103. In addition, the predetermined reaction method of the reaction system 103 can also be set to record illegal activities of unauthorized users and therefore, legal action can be brought against unauthorized users. Further, the predetermined reaction method of the reaction system 103 can also include tracing the user 107 to obtain related data such as an IP address.

The response contents provided by the reaction system 103 include virtual data similar to real data in the inner data system 102 so that these virtual data do not reveal any confidential information. Further, the response contents can include tracing programs like Trojan programs which run in the user's computer.

Further, so as to ensure sufficient bandwidth of the network for normal communications, the redirect system 101 in another embodiment according to the present invention has a management interface so that system administrators can set a maximum number for reacting unauthorized users. When the unauthorized attempts exceed the maximum number, the attempts are rejected.

On the other hand, the present invention also provides a preventing reproducing digital recording media method and system thereof. According to the method, a virus that can destroy the copy function of the computer is spread in the digital data and built in the rails of the digital recording media. In other words, the digital data stored in the digital recording media includes a virus for destroying the copy function. When a user wants to reproduce this digital recording media through the computer, this virus is loaded into the computer to destroy the copy function result in the reproduction failing.

However, according to the present invention, when program modules are modified, the monitor program requires the user to input the set user password. If wrong passwords are typed later, the monitor program forbids modification of these program modules. In other words, the copy function destroying virus can not work in this situation because any modification is rejected under the monitor program monitoring.

Therefore, an additional common password is set in each computer system. The main purpose of the common password is to make some special function with this common password that can be performed in any computer but not performing the password authentication step. In other words, this virus can use the common password to pass the detection of the monitor program to perform any program modification. Therefore, when a virus with the common password is spread in the digital recording media and is loaded into a computer, the copy function of this computer is destroyed by this virus result in a reproduction failing.

Additionally, the common password can be also used to destroy the browse function of a computer of a hacker. For example, a browse function destroying virus with the common password is spread in the reaction system as shown in the figure 2. When a hacker enters a computer system and is redirected into the reaction system, this virus is loaded into the computer belonging to the hacker to destroy the browse function. In other words, even though the monitor program described in the present invention is installed into this computer belonging to the hacker, this browse function destroying virus can use the common password to pass the detection of the monitor program to destroy the browse function.

On the other hand, since each computer has a special password, it is necessary to resolve each password for the hacker to spread virus through the Internet. In other words, the virus is not spread through the Internet if the hacker only resolves a few computer passwords.

As a whole, according to the present invention, a special identification number that can be a predetermined number or a user set number is arranged in each computer. Utilizing this special number, this computer system of the present invention can trace the hacker through a reaction system. When a hacker enters this computer system and input a wrong password, the redirect system direct the hacker to enter a reaction system to browse wrong data and trace this computer used by this hacker by the identification number. Since each computer has a special identification number, the user can be easily traced by tracing the identification number.

Additionally, the system also provides a monitor program to record images of program modules of an operating system. Users set passwords to the monitor program for authentication when the program modules of the operating system are modified. If wrong passwords are typed later, the monitor program forbids modification of these program modules. Further, if any program module is detected having unauthenticated modification, that program module is deleted and an original image of that program module is loaded to recover normal operation of the operation system. Additionally, a common password is also provided in the computer system. Some special function can use this common password to pass the detection of the monitor program.

Those skilled in the art will readily observe that numerous modifications and alterations of the device may be made while retaining the teaching of the invention. Accordingly, the above disclosure should be construed as limited only by the metes and bounds of the appended claims.

## Claims

1. A computer data protecting method for protecting a computer system, said method comprising:
designing a monitor program with a common password for an operation system, wherein said monitor program monitors a plurality of program modules of said operating system;
after said operating system is installed, said monitor program allows a user to assign a user password;
asking said user to enter said user passwords when any modification/addition/deletion action is performed onto said program modules of said operating system; and
if said user passwords is missing, said monitor program forbids any modification/addition/deletion action to be performed onto said program modules.

2. The method of claim 1, wherein said method further comprises arranging a special identification number to said computer system.

3. The method of claim 2, wherein said computer can be traced through said special identification number when said computer is connected to Internet.

4. The method of claim 2, wherein said method further comprises setting an acceptable bandwidth to said special identification number.

5. The method of claim 1, wherein said method further comprises if said monitor program detects said program modules having unauthenticated modification, said monitor program deletes said program modules and loads the backup images of said program modules so as to recover said computer back to normal operation.

6. The method of claim 1, wherein said method further comprises when said monitor program detects any modification/addition/deletion action with a common password, said modification/addition/deletion action is performed onto said program modules of said operating system.

7. The method of claim 1, wherein said method further comprises spreading a copy function destroying virus with said common password in a recording digital media.

8. The method of claim 1, wherein said method further comprises spreading a browse function destroying virus with said common password to a unauthenticated browser.

9. The method of claim 1, wherein said monitor program scans the contents of said program modules periodically so as to detect if said program modules have unauthenticated modification.

10. The method of claim 1, wherein said monitor program detects if said program modules have unauthenticated modification whenever said computer is started and before said operating system is loaded.

11. The method of claim 1, wherein said monitor program intercepts a call from a file operation interface of said operating system, so as to detect when said program modules have been performed with any modification/addition/deletion action.

12. The method of claim 1, wherein said monitor program determines if any modification/addition/deletion action by inspecting the file lengths of said program modules.

13. The method of claim 1, wherein said monitor program determines if any modification/addition/deletion action occurs by inspecting the modification time of said program modules in comparison with the previously-authenticated modification time of said program modules.

14. The method of claim 1, wherein said monitor program computes an index via a Hash function with respect to said program modules.

15. The method of claim 1, wherein said monitor program are designed in advance with respect to different kinds of said operating system.

16. The method of claim 1, wherein different compilers are sued to compile said password and said operating system.

17. An computer data protection method, comprising:
recording image files of a plurality of program modules in an operating system, wherein said operating system has a common password;
allowing a user to assign a user password;
monitoring if said program modules are modified and said modified action does not have said common password;
asking said user to enter said user password;
if said user passwords is missing, then the modification of said program modules is forbidden; and
when it is detected that said program modules have unauthenticated modification, said program modules that are not authentically modified are deleted, and replaced with said legal image files of said program modules, so as to revoke said operating system back to normal operation.

18. The computer data protection method of claim 17, further comprising to scan the contents of said program modules periodically so as to detect if said program modules have unauthenticated modification.

19. The computer data protection method of claim 17, further comprising to detect if said program modules have unauthenticated modification whenever said computer is started and before said operating system is loaded.

20. The computer data protection method of claim 17, further comprising to intercept a call from a file operation interface of said operating system, so as to detect when said program modules have been performed with any modification/addition/deletion action.

21. The computer data protection method of claim 17, further comprising to determine if any modification/addition/deletion action by inspecting the file lengths of said program modules.

22. The computer data protection method of claim 17, further comprising to determine if any modification/addition/deletion action occurs by inspecting the modification time of said program modules in comparison with the previously-authenticated modification time of said program modules.

23. The computer data protection method of claim 17, further comprising to computer an index via a Hash function with respect to said program modules.

24. The computer data protection method of claim 17, further comprising to provide a data base corresponding to different kinds of said operating system.

25. The computer data protection method of claim 17, wherein said method further comprises spreading a copy function destroying virus with said common password in a recording digital media.

26. The computer data protection method of claim 25, wherein when recording digital media is loaded into said computer, the copy function of said computer is destroyed.

27. The computer data protection method of claim 17, wherein said method further comprises spreading a browse function destroying virus with said common password to a unauthenticated browser.

28. The computer data protection method of claim 17, wherein different compilers are sued to compile said password and said operating system.

29. A computer data protecting method, said method comprising:
designing a monitor program for an operation system, wherein said monitor program monitors a plurality of program modules of said operating system;
after said operating system is installed, said monitor program allows a user to assign a user password;
asking said user to enter said user passwords when any modification/addition/deletion action is performed onto said program modules of said operating system; and
if said user passwords is missing, said monitor program forbids any modification/addition/deletion action to be performed onto said program modules.

30. The method of claim 29, wherein said method further comprises arranging a special identification number to said computer system.

31. The method of claim 30, wherein said method further comprises tracing a identification number of an unauthenticated browser.

32. The method of claim 30, wherein said method further comprises setting an acceptable bandwidth to said special identification number.

33. The method of claim 29, wherein said method further comprises setting a common password for permitting said modification/addition/deletion action is performed onto said program modules of said operating system when said monitor program detects any modification/addition/deletion action with said common password.

34. The method of claim 33, wherein said method further comprises spreading a copy function destroying virus with said common password in a recording digital media.

35. The method of claim 33, wherein said method further comprises spreading a browse function destroying virus with said common password to a unauthenticated browser.

36. The method of claim 29, wherein said method further comprises if said monitor program detects said program modules having unauthenticated modification, said monitor program deletes said program modules and loads the backup images of said program modules so as to recover said computer back to normal operation.

37. The method of claim 29, wherein said monitor program scans the contents of said program modules periodically so as to detect if said program modules have unauthenticated modification.

38. The method of claim 29, wherein said monitor program detects if said program modules have unauthenticated modification whenever said computer is started and before said operating system is loaded.

39. The method of claim 29, wherein said monitor program intercepts a call from a file operation interface of said operating system, so as to detect when said program modules have been performed with any modification/addition/deletion action.

40. The method of claim 29, wherein said monitor program determines if any modification/addition/deletion action by inspecting the file lengths of said program modules.

41. The method of claim 29, wherein said monitor program determines if any modification/addition/deletion action occurs by inspecting the modification time of said program modules in comparison with the previously-authenticated modification time of said program modules.

42. The method of claim 29, wherein said monitor program computes an index via a Hash function with respect to said program modules.

43. The method of claim 29, wherein said monitor program are designed in advance with respect to different kinds of said operating system.

44. The method of claim 29, wherein different compilers are sued to compile said password and said operating system.
